# EUROPÄISCHE PATENTSCHRIFT

(11) **EP 0 715 104 B1**
(45) Veröffentlichungstag und Bekanntmachung des Hinweises auf die Patenterteilung: **02.02.2000**
(21) Anmeldenummer: 95118604.8
(22) Anmeldetag: 26.11.1995
(51) Int. Cl.: F16J 15/54

(54) **Abdichtung eines Wellendurchtrittes für ein geländegängiges Fahrzeug**
Shaft fassage sealing for an off-road vehicle
Joint de traversée d'arbre pour véhicule tout-terrain

(30) Priorität: 29.11.1994 AT 46094
(43) Veröffentlichungstag der Anmeldung: 05.06.1996
(73) Patentinhaber: STEYR-DAIMLER-PUCH AKTIENGESELLSCHAFT, 1010 Wien (AT)
(72) Erfinder: Skoff, Gerhard, Dipl-Ing-, A-1130 Wien (AT)

(56) Entgegenhaltungen:
- EP-A- 0 351 395
- DE-A- 1 475 879
- US-A- 5 028 054

## Beschreibung

Die Neuerung handelt von einer Abdichtung zwischen einer Radnabe und einem Radträger eines geländegängigen Kraftfahrzeuges bestehend aus mindestens einem Wellendichtring und aus einer an dessen Außenseite angeordneten Grobabdichtung, die von einem ersten Ring und von einem zweiten Ring gebildet sind, wovon der erste mit der Radnabe und der zweite mit dem Radträger drehfest verbunden sind.

Bei geländegängigen Fahrzeugen, egal ob Rad- oder Kettenfahrzeuge, besteht das Problem, daß beim Durchwaten von Gewässern oder Morast nicht nur Wasser, sondern auch der stets mitgeführte Sand von den empfindlichen Wellendichtringen fernzuhalten ist.

Eine gattungsgemäße Abdichtung ist aus der AT-PS 389 361 (& EP-A-0 351 395) bekannt. Bei dieser ist der radnabenfeste Ring ein einen Auffangraum bildender radial nach außen gerichteter Kragen und der radträgerfeste Ring ein ebensolcher Kragen mit den ersteren außen übergreifendem Rand. Es besteht somit ein Dichtspalt mit radialer Erstreckung.

Es hat sich gezeigt, daß auch bei dieser Lösung Wasser und abrasiver Schmutz unter extremen Bedingungen (Sand, große Wattiefen) nicht vom Dichtring ferngehalten wird. Demzufolge nützt sich seine empfindliche und weiche Dichtlippe schnell ab und wird zerstört. Außerdem ist der Dichtspalt durch seine radiale Lage sehr stark von der Einhaltung genauester Maß-, Einbau- und Rundlauftoleranzen abhängig, was die Fertigung verteuert. Dazu kommt, daß der als Schleuderring gedachte wellenfeste Ring bei geringer Fahrgeschwindigkeit wirkungslos ist. Die Folge verstärkter Abnutzung des Dichtringes sind aber Funktionsstörungen bis zum Totalausfall des Antriebes. Jedenfalls aber muß der Dichtring häufig ausgewechselt werden, was mit Kosten und großem Arbeitsaufwand verbunden ist, da er naturgemäß an einer schwer zugänglichen und räumlich beengten Stelle sitzt.

Der Neuerung liegt daher die Aufgabe zugrunde, eine Abdichtung zu schaffen, die auch unter schwersten Bedingungen zuverlässig Wasser und abrasiven Schmutz vom Dichtring fernhält und geringe Anforderungen an die Genauigkeit stellt.

Neuerungsgemäß wird das dadurch erreicht, daß einer der Ringe eine axial gerichtete Nut und der andere Ring einen in diese eintauchenden axial gerichteten Kragen aufweist, wobei in der Nut ein Ring aus einem weichen kompressiblen Werkstoff angebracht und der Raum zwischen den beiden Ringen innerhalb der Nut mit Fett gefüllt ist. Der Ring besteht vorzugsweise aus Filz.

Dadurch wird zunächst ein toleranzunempfindlicher axial gerichteter Dichtspalt geschaffen. Es ist nicht einmal erforderlich, die Ringe zu zentrieren, zumindest einer der Ringe braucht nur ohne Zentrierabsatz an seinem Tragteil angeschraubt zu sein. Wegen der Nachgiebigkeit des Filzes braucht der Einbau auch in axialer Richtung nicht sehr genau zu sein. Der Filzring bewirkt im Zusammenwirken mit der radial innerhalb vorgesehenen Fettfüllung eine auch bei Stillstand in tiefem Wasser zuverlässig wirksame Abdichtung. Der Filzring bildet sozusagen einen nachgiebigen, aber trotzdem dichten Stopfen für die Fettfüllung.

Eine vorteilhafte Weiterbildung besteht darin, daß der erste Ring auch gleich den mindestens einen Wellendichtring aufnimmt. Das schafft ohne Mehraufwand eine erleichterte Montage, da der Dichtring jedenfalls genau zentriert sein muß. Weiters wird die Montage und die Nachrüstung erleichtert, wenn der zweite Ring die Nut aufweist und der erste den Kragen.

Im folgenden wird die Neuerung anhand von Abbildungen beschrieben und erläutert. Es stellen dar:
- Fig.1: einen Längsschnitt durch eine neuerungsgemäße Abdichtung in einer ersten Ausführungsform,
- Fig.2: dasselbe in einer Variante.

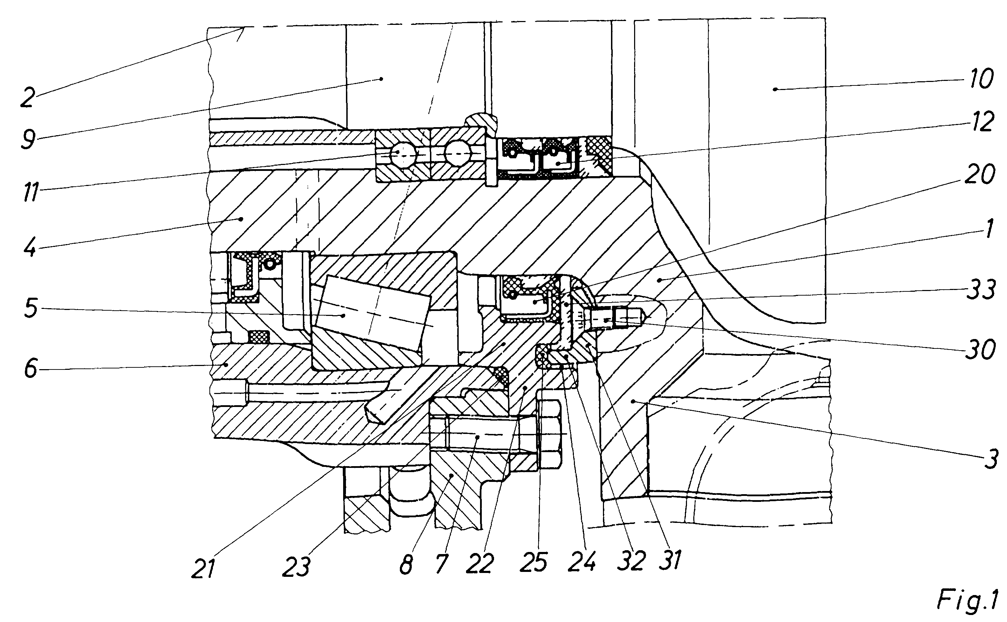

In Fig. 1 ist ausschnittweise ein Radträger 1 eines geländegängigen Kraftfahrzeuges abgebildet, die Rotationsachse des Rades ist mit 2 bezeichnet. Der Radträger 1 besteht aus einem Flansch 3, der die Achsschenkellagerung trägt (strichliert und ohne Bezugszeichen) und aus einem rohrförmigen Teil 4, der die Wälzlager 5 trägt, auf denen eine Nabe 6 drehbar gelagert ist. Abgebildet ist nur das Wälzlager 5, das zweite Lager befindet sich links außerhalb des Bildes. An der Nabe 6 ist mittels Gewindebolzen 7 eine Bremsscheibe 8 befestigt. Im Inneren des Radträgers 1 ist eine Radantriebswelle 9, die von einem homokinetischen Gelenk 10 aus angetrieben wird in Lagern 11 gelagert und mittels einer Dichtung 12, die nicht Gegenstand der Neuerung ist, abgedichtet. Die Radantriebswelle 9 ist links außerhalb der Abbildung mit der Nabe 6 antriebsverbunden.

Zur Abdichtung zwischen dem Radträger 1 und der Radnabe 6 ist ein Dichtring 20 vorgesehen, in diesem Fall ein Radiallippendichtring. Dieser sitzt in einem ersten Ring 21, der gegenüber der Nabe 6 zentriert und mittels eines Flansches 22, der ebenfalls vom Gewindebolzen 7 erfaßt wird, befestigt ist. Zwischen dem ersten Ring 21 und der Radnabe 6 ist noch ein O-Ring 23 vorgesehen. Dieser erste Ring 21 ist auf seiner dem Radträger 1 zugekehrten Außenseite mit einer axial gerichteten Nut 24 versehen, in deren Grund ein Filzring 25 liegt. Dicke und Dichte dieses Sitzrings 25 sind entsprechend gewählt.

Am Radträger 1 ist mittels Gewindeschrauben 30 ein zweiter Ring 31 unzentriert befestigt. Unzentriert bedeutet hier, daß am Radträger 1 keine Zentrieransätze vorgesehen sind, die Zentrierung erfolgt nur durch die Gewindeschrauben 30. Der zweite Ring 31 weist einen axial gerichteten Kragen 32 auf, der in die axial gerichtete Nut 24 des ersten Ringes 21 eintaucht und den Filzring 25 berührt. Der Raum zwischen den beiden Ringen 21,31 dem Radträger 1 und dem Filzring 25 enthält eine Fettfüllung 33. Die beiden Ringe 21,31 der Filzring 25 und die Fettfüllung 33 bilden die Grobabdichtung, die Wasser auch höheren Druckes und Sand zuverlässig von dem Dichtring 20 fernhält.

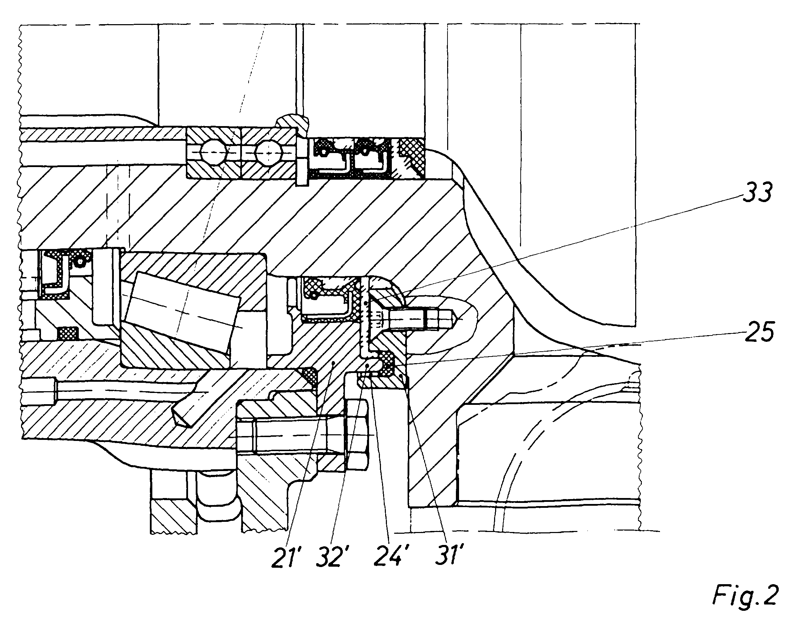

Die Ausführungsform der Fig. 2 unterscheidet sich davon nur dadurch, daß der erste Ring 21' den axial gerichteten Kragen 32' und der zweite Ring 31' die axial gerichtete Nut 24' aufweisen. Die Wirkung ist dieselbe.

## Patentansprüche

1. Abdichtung zwischen einer Radnabe (6) und einem Radträger (1) eines geländegängigen Kraftfahrzeuges, bestehend aus mindestens einem Wellendichtring (20) und aus einer an dessen Aussenseite angeordneten Grobabdichtung, die von einem ersten (21) und von einem zweiten (31) Ring gebildet sind, wovon der erste mit der Radnabe (6) und der zweite mit dem Radträger (1) drehfest verbunden ist, **dadurch gekennzeichnet,** daß einer der Ringe (21;31') eine axial gerichtete Nut (24;24') und der andere Ring (31;21') einen in diese eintauchende axial gerichteten Kragen (32;32') aufweist, wobei in der Nut (24;24') ein Ring (25) aus einem weichen, kompressiblen Werkstoff angebracht und der Raum (33) zwischen den beiden Ringen (21,31;21',31') innerhalb der Nut (24;24') mit Fett gefüllt ist.

2. Abdichtung nach Anspruch 1, **dadurch gekennzeichnet,** daß der Ring (25) aus Filz besteht.

3. Abdichtung nach Anspruch 1, **dadurch gekennzeichnet,** daß der erste Ring (21;21') mindestens einen Wellendichtring (20) aufnimmt.

4. Abdichtung nach Anspruch 1, **dadurch gekennzeichnet,** daß der erste Ring (21) die Nut (24) aufweist und der zweite Ring (31) den axialen Kragen (32).

## Claims

1. A seal between a wheel hub and a wheel support of a cross-country vehicle, this consisting of at least one shaft seal (20) and a coarse seal that is arranged on the outside of this, this coarse seal consisting of a first ring (21) and a second ring (31), the first such ring being connected to the wheel hub (6) and the second being connected to the wheel mounting (1) in such a manner as to be unable to rotate independently of it, characterized in that one of the rings (21; 31') incorporates an axial groove (24; 24') and the other ring (31; 21') incorporates a collar (32; 32') that fits into this, a ring (25) that is of a soft and compressible material being installed in the groove (24; 24') and the space (33) between the two rings (21, 31; 21', 31') within the groove being filled with grease.

2. A seal as defined in Claim 1, characterized in that the ring (25) is of felt.

3. A seal as defined in Claim 1, characterized in that the first ring (21; 21') accommodates at least one shaft seal (20).

4. A seal as defined in Claim 1, characterized in that the first ring (21) incorporates the groove (24) and the second ring (31) incorporates the collar (32).

## Revendications

1. Etanchéité entre un moyeu et un porte-roue d'un véhicule automobile tout terrain, comportant au moins une bague à lèvres (20) et un joint d'étanchéité grossier disposé sur son côté extérieur, le joint d'étanchéité grossier étant composé d'une première bague (21) et d'une seconde bague (31) dont la première est fixée en rotation au moyeu (6) et la seconde est fixée au porte-roue (1), **caractérisée en ce que** l'une des bagues (21; 31') comporte une fente axiale (24; 24') et l'autre bague comporte un collet (32; 32') pénétrant dans celle-ci, une bague (25) consistant en un matériau mou et compressible étant disposée dans la fente (24; 24') et l'espace (33) entre les deux bagues (21, 31; 21', 31') à l'intérieur de la fente (24; 24') étant rempli de graisse.

2. Etanchéité selon la revendication 1, **caractérisée en ce que** la bague (25) est en feutre.

3. Etanchéité selon la revendication 1, **caractérisée en ce que** la première bague (21; 21') contient au moins une bague à lèvres (20).

4. Etanchéité selon la revendication 1, **caractérisée en ce que** la première bague (21) comporte la fente (24) et la seconde bague (31) comporte le collet axial (32).
